# FASCICULE DE BREVET EUROPEEN

(11) **EP 1 117 562 B1**
(45) Date de publication et mention de la délivrance du brevet: **20.11.2002**
(21) Numéro de dépôt: 99948873.7
(22) Date de dépôt: 24.09.1999
(51) Int. Cl.: B60Q 11/00, B60Q 1/46

(54) **PROCEDE ET DISPOSITIF DE DIAGNOSTIC DU BON FONCTIONNEMENT DES LAMPES DE FEUX DE DETRESSE D'UN VEHICULE AUTOMOBILE**
VERFAHREN UND EINRICHTUNG ZUR DIAGNOSE DES BETRIEBES VON WARNBLINKLEUCHTEN EINES KFZ-FAHRZEUGES
METHOD AND DEVICE FOR DIAGNOSING THE PROPER FUNCTIONING OF A MOTOR VEHICLE HAZARD WARNING FLASHER LIGHTS

(30) Priorité: 28.09.1998 FR 9812091
(43) Date de publication de la demande: 25.07.2001
(73) Titulaire: Siemens VDO Automotive S.A.S., 31036 Toulouse cedex 01 (FR)
(72) Inventeur: TORNARE, Jean-Marc, F-47000 Agen (FR)
(74) Mandataire: Berg, Peter, Dipl.-Ing.
(86) Numéro de dépôt international: EP9907153
(87) Numéro de publication internationale: WO00018610

(56) Documents cités:
- DE-A- 3 410 570
- DE-A- 4 234 271
- DE-A- 19 756 611
- FR-A- 2 468 481

## Description

La présente invention concerne un procédé et un dispositif de diagnostic du bon fonctionnement des lampes de feux de détresse d'un véhicule automobile.

Tous les véhicules automobiles actuellement vendus sont munis de feux de détresse. Ces feux se caractérisent par l'éclairement simultané et cyclique des lampes de signalisation de changement de direction (clignotants gauches et droits) du véhicule.

De tels feux de détresse sont destinés à être mis en oeuvre pour informer les véhicules se trouvant à proximité d'un état de détresse du véhicule pouvant nuire à la circulation routière des autres usagers (stationnement dangereux, panne, etc.).

Il est apparu utile de pouvoir diagnostiquer le bon fonctionnement de ces feux alors même qu'ils sont en fonctionnement. En effet, lorsque le conducteur décide d'actionner ces feux de détresse, c'est pour informer les autres usagers d'une situation potentiellement dangereuse et il est impératif que les feux de détresse fonctionnent correctement afin d'assurer la fonction qui leur est assignée.

Jusqu'à présent, seul le diagnostic du bon fonctionnement des clignotants était réalisé. A cet effet, il suffisait de relire le courant parcourant le circuit d'alimentation des clignotants pour déterminer si une lampe était défectueuse. En effet, en fonctionnement normal, en mode clignotant, les voies gauches et droites sont mutuellement exclusives. Ainsi, seule la voie de gauche est alimentée pour activer les clignotants (avant / arrière) gauches ; de même, pour la voie de droite. De ce fait, en effectuant une relecture de courant faisant la somme des courants parcourant les deux voies et en renvoyant la mesure effectuée uniquement sur la voie alimentée, on détermine automatiquement sur quel côté se trouve la lampe hors d'usage. Cette information est ensuite retransmise au conducteur en faisant clignoter plus rapidement le témoin de clignotant situé sur le tableau de bord et correspondant au côté présentant une lampe défectueuse. Ainsi, une lampe défectueuse détectée sur le côté gauche provoque le doublement de la fréquence de clignotement du témoin gauche.

DE 42 34 271 A1 montre et décrit un procédé et un dispositif de diagnostic du bon fonctionnement des lampes de feux de signalisation de changement de direction droite et gauche d'un véhicule automobile, mesurant, immédiatement après mise en fonction de la commande de signalisation, le courant parcourant dans le circuit d'alimentation des lampes de signalisation de changement de direction droite et gauche (respectivement le temps de décroissance du courant). Le courant / le temps de décroissance mesuré est comparé à une valeur de référence respective. Si le courant / le temps dépasse la valeur de référence respective, un défaut est signalisé.

Le diagnostic du bon fonctionnement des lampes des feux de détresse, impliquant forcément celui des lampes de clignotant, il est apparu opportun de se servir du diagnostic des clignotants pour faire le diagnostic des feux de détresse. Ceci permet, en effet, de ne pas ajouter de dispositif supplémentaire. Malheureusement, comme le diagnostic des clignotants fait une simple relecture du courant circulant dans les deux voies, et comme ces deux voies sont alimentées simultanément (dans le cas des feux de détresse), le simple fait d'utiliser le diagnostic de la fonction clignotant pour faire le diagnostic des feux de détresse est impossible. En effet, dans ce cas, il n'est plus possible de déterminer le côté présentant une lampe défectueuse, et plus grave encore, les variations de résistance interne dues à l'alimentation cyclique de la totalité des lampes sont supérieures à celles provoquées par une lampe défectueuse. De ce fait, il n'est pas possible d'utiliser le dispositif de diagnostic des clignotants pour réaliser le diagnostic des feux de détresse.

La présente invention a pour but de réaliser le diagnostic des feux de détresse selon un procédé et un dispositif les plus semblables possibles à ceux utilisés pour le diagnostic des clignotants.

A cet effet, la présente invention concerne un procédé de diagnostic du bon fonctionnement des lampes de feux de détresse d'un véhicule automobile, le dit procédé étant caractérisé en ce qu'il consiste à :
- décaler temporellement et alternativement la fin d'éclairement des lampes de signalisation de changement de direction droite et gauche du véhicule,
- mesurer le courant parcourant le circuit d'alimentation des dites lampes de détresse lors du décalage temporel,
- comparer la valeur mesurée à une valeur de référence, et
- en déduire si au moins une des lampes est hors d'usage et dans ce cas en informer le conducteur.

Le décalage de la fin d'éclairement des lampes de signalisation droite et gauche permet d'effectuer la mesure du courant circulant à l'intérieur du circuit uniquement pendant le moment où seul un des côtés est alimenté. De ce fait, il est possible, lorsqu'une lampe défectueuse est détectée, d'indiquer de quel côté du véhicule se trouve cette lampe défectueuse. D'autre part, en effectuant cette mesure du courant alors qu'une partie des lampes de signalisation est alimentée (un côté uniquement) et uniquement en fin d'éclairement des lampes (c'est-à-dire lorsque le courant est stabilisé à un faible niveau à l'intérieur de la lampe), il est possible d'éviter les variations de résistance des lampes dues au courant d'appel en début d'éclairement et, de ce fait, les variations de courant mesurées sont directement représentatives d'une lampe défectueuse.

On remarquera que le décalage temporel alternatif de la fin d'éclairement permet, lors d'une première mesure, de déterminer le courant circulant dans les lampes situées d'un côté du véhicule et, lors de la mesure suivante, de déterminer le courant circulant dans les lampes situées de l'autre côté du véhicule.

Bien entendu, le décalage temporel de la fin d'éclairement des lampes demeure non visible à l'oeil nu. De ce fait, les clignotants droits et gauches s'éclairent en même temps et semblent s'éteindre en même temps (pour un observateur du véhicule) alors qu'en fait, ils s'éclairent bien en même temps mais s'éteignent l'un après l'autre.

Pour éviter que le décalage temporel ne soit perceptible par l'oeil, il est préférable que ce décalage reste inférieur à 50 ms. De préférence, il est de l'ordre de 15 ms.

Avantageusement, ce décalage temporel alternatif et la mesure du courant parcourant les lampes sont effectués en continu. On réalise ainsi un diagnostic permanent du bon fonctionnement des lampes des feux de détresse.

La présente invention concerne également un dispositif de diagnostic correspondant.

D'autres objets, caractéristiques et avantages de la présente invention ressortiront d'ailleurs de la description qui suit, à titre d'exemple non limitatif, et en référence aux figures annexées dans lesquelles :
- la figure 1 est une vue schématique illustrant le procédé de diagnostic selon la présente invention.
- la figure 2 est une vue schématique illustrant l'intensité du courant parcourant une lampe lors de la phase d'éclairement.

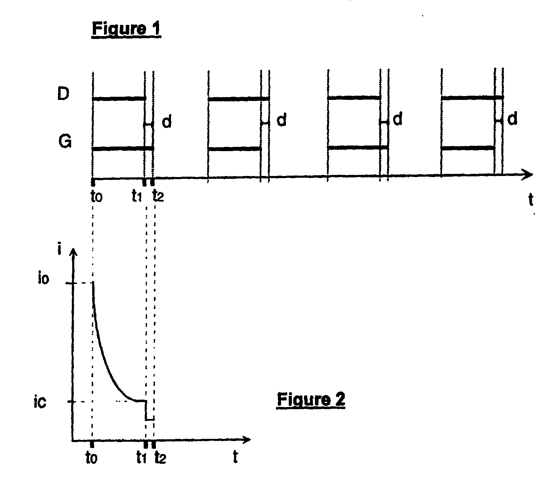

Selon la forme de réalisation illustrée aux figures 1 et 2, le procédé de diagnostic des lampes des feux de détresse, selon la présente invention, consiste à (dans une première étape) décaler temporellement et alternativement la fin d'éclairement des lampes de signalisation de changement de direction droite et gauche du véhicule.

Comme cela est mieux visible à la figure 1, la ligne d'abscisse représente le temps. A un instant t₀, le conducteur actionne les feux de détresse. La ligne supérieure représentée à la figure 1 illustre la durée d'éclairement des feux clignotants droits, la ligne inférieure correspond de la même manière aux clignotants gauches. Lors de la mise en action des feux de détresse (t₀), les clignotants droits et gauches sont alimentés simultanément.

A la figure 2, on remarque que le courant d'appel i₀ due à l'éclairement simultané des lampes est important. Ce courant d'appel perd rapidement de son intensité pour se stabiliser rapidement autour de la valeur i_{c}.

A l'instant t₁ (figure 1) on arrête d'alimenter les clignotants de droite (dans l'exemple représenté). L'alimentation des clignotants gauches est quant à elle arrêtée à l'instant t₂. L'intervalle de temps d représente le décalage temporel de la fin d'éclairement des lampes de signalisation de changement de direction (clignotants) droites et gauches.

Avantageusement, pendant ce temps d, alors que seuls les clignotants gauches sont alimentés, on réalise de manière classique une lecture de l'intensité du courant traversant l'ensemble des lampes des feux de détresse. Comme seules les lampes de gauches sont alimentées, on compare la valeur de l'intensité mesurée à une valeur de référence et si cette valeur mesurée est inférieure à la valeur de référence, on en déduit qu'au moins une lampe de gauche est hors d'usage. Dans ce cas, on en informe le conducteur, par exemple en doublant la fréquence de clignotement du témoin gauche des clignotants. Ce témoin de clignotement est celui qui est traditionnellement placé sur le tableau de bord du véhicule.

Lors de l'éclairement suivant des feux de détresse, on arrête d'abord d'alimenter les clignotants gauches, puis droits. De ce fait en alternance, on arrête d'alimenter une voie (droite) puis l'autre (gauche) et inversement au cycle suivant.

Ainsi, à la fin du second éclairement, on mesure, pendant le temps d, l'intensité du courant circulant à l'intérieur des lampes des clignotants droits du véhicule. Là encore, si la valeur mesurée est inférieure à une valeur de référence, on en déduit qu'une lampe de droite est hors d'usage et on en informe le conducteur. Cette fois-ci, c'est le témoin droit du clignotant qui voit sa fréquence doublée.

Avantageusement, le décalage temporel entre l'éclairement des lampes des clignotants droits et gauches est réalisé à la fin de l'éclairement simultané de ces lampes. Ceci permet d'attendre que l'intensité du courant circulant dans les lampes soit stabilisée pour effectuer la mesure. De ce fait, les variations du courant décelées à ce moment là sont directement représentatives d'un défaut de fonctionnement d'une lampe. Si ce décalage temporel avait été effectué au moment de l'alimentation des lampes, les variations du courant d'appel i₀ auraient masqué le défaut de fonctionnement des lampes, rendant impossible tout diagnostic des feux de détresse à ce moment là.

On notera que le décalage temporel réalisé entre la voie gauche et la voie droite en fin d'éclairement reste invisible à l'oeil nu. Ainsi, un observateur ne pourra pas percevoir que l'une des voies s'éteint avant l'autre. A cet effet, le décalage temporel d ne dépasse pas 50 ms. De préférence, ce décalage temporel est de l'ordre de 15 ms. Avec un tel décalage, l'unité centrale de calcul (non représentée) associée au dispositif de commande des feux de détresse est capable de mesurer correctement l'intensité du courant, de la comparer, et d'informer le conducteur d'un dysfonctionnement.

Ainsi, le procédé de diagnostic du bon fonctionnement des lampes des feux de détresse selon la présente invention se caractérise par le fait qu'il consiste à :
- décaler temporellement et alternativement la fin d'éclairement des lampes de signalisation de changement de direction droite et gauche du véhicule,
- mesurer le courant parcourant le circuit d'alimentation des dites lampes de détresse lors du décalage temporel,
- comparer la valeur mesurée à une valeur de référence, et
- en déduire si au moins une des lampes est hors d'usage et, dans ce cas, en informer le conducteur.

De préférence, ce diagnostic est réalisé en continu pendant toute la durée de fonctionnement des feux de détresse.

On notera que ce procédé est adapté pour déterminer non seulement qu'au moins une lampe des feux de détresse est hors d'usage, mais encore détermine le côté du véhicule sur lequel se trouve cette lampe hors d'usage, et en informe le conducteur.

La présente invention concerne également un dispositif de diagnostic correspondant (non représenté). Ce dispositif comporte :
- un moyen de décalage temporel et alternatif de la fin d'éclairement des lampes de signalisation de changement de direction droite et gauche du véhicule,
- un moyen de mesure du courant parcourant un circuit d'alimentation des lampes de détresse lors du décalage temporel,
- un moyen de comparaison de la valeur de courant mesurée avec une valeur de référence,
- un moyen de calcul adapté pour en déduire si au moins une lampe est hors d'usage, et
- un moyen informant le conducteur qu'au moins une lampe de détresse est hors d'usage.

## Revendications

1. Procédé de diagnostic du bon fonctionnement des lampes de feux de détresse d'un véhicule automobile, le dit procédé consistant à :
- décaler temporellement et alternativement la fin d'éclairement des lampes de signalisation de changement de direction droite et gauche du véhicule,
- mesurer le courant (i) parcourant un circuit d'alimentation des dites lampes de détresse lors du décalage temporel,
- comparer la valeur mesurée à une valeur de référence, et
- en déduire si au moins une des lampes est hors d'usage et dans ce cas en informer le conducteur.

2. Procédé selon la revendication 1, **caractérisé en ce que** le décalage (d) de la fin d'éclairement est au maximum de 50 ms.

3. Procédé selon la revendication 2, **caractérisé en ce que** de préférence le décalage (d) est de l'ordre de 15 ms.

4. Procédé selon l'une quelconque des revendications précédentes, **caractérisé en ce qu'**il est effectué en continu pendant toute la durée de fonctionnement des feux de détresse.

5. Procédé selon l'une quelconque des revendications précédentes, **caractérisé en ce qu'**il est adapté pour déterminer le côté du véhicule comportant une lampe hors d'usage et en informe le conducteur.

6. Procédé selon l'une quelconque des revendications précédentes, **caractérisé en ce que** le décalage temporel appliqué entre la fin d'éclairement des lampes droite et gauche est non décelable à l'oeil nu.

7. Dispositif de diagnostic mettant en oeuvre le procédé selon l'une quelconque des revendications précédentes, le dit dispositif comportant :
- un moyen de décalage temporel et alternatif de la fin d'éclairement des lampes de signalisation de changement de direction droite et gauche du véhicule,
- un moyen de mesure du courant (i) parcourant un circuit d'alimentation des lampes de détresse lors du décalage temporel,
- un moyen de comparaison de la valeur de courant mesurée avec une valeur de référence,
- un moyen de calcul adapté pour en déduire si au moins une lampe est hors d'usage, et
- un moyen informant le conducteur qu'au moins une lampe de détresse est hors d'usage.

## Claims

1. Method for diagnosing the correct functioning of the hazard warning light lamps, said method consisting of:
- temporarily and alternately offsetting the end of illumination of the right-and left-side direction indicator lights of the vehicle,
- measuring the current (i) flowing through a power circuit of said hazard warning lights during temporary offsetting,
- comparing the measured value with a reference value, and
- deducing whether at least one of the lights is out of use and, if so, informing the driver of this,

2. Method according to Claim 1, **characterised in that** the offsetting (d) of the time illumination ends is no longer than 50 ms.

3. Method according to Claim 2, **characterised in that**, preferably, offsetting (d) lasts for around 15 ms.

4. Method according to any one of the preceding claims, **characterised in that** it is carried out continuously for the whole time that the hazard warning lights are in use.

5. Method according to any one of the preceding claims, **characterised in that** it is designed to determine the side of the vehicle that has a faulty light and inform the driver of this.

6. Method according to any one of the preceding claims, **characterised in that** the temporary offsetting applied between the end of illumination of the right- and left-side lights cannot be seen by the naked eye.

7. Diagnostic device implementing the method according to any one of the preceding claims, said device consisting of:
- a means of temporarily and alternately offsetting the end of illumination of the right- and left-side direction indicator lights of the vehicle,
- a means of measuring the current (i) flowing through a power circuit of the hazard warning lights during temporary offsetting,
- a means of comparing the measured current value with a reference value,
- a processing means designed to deduce whether at least one light is out of use, and
- a means to inform the driver that at least one hazard warning light is out of use.

## Patentansprüche

1. Verfahren zum Diagnostizieren des Betriebs von Warnblinkleuchten eines Kraftfahrzeuges, welches Verfahren darin besteht:
- zeitlich und abwechselnd das Ende der Einschaltung der rechten und linken Richtungsanzeigeleuchten des Fahrzeuges zu verschieben,
- den Strom (i) zu messen, der eine Versorgungsschaltung der Warnblinkleuchten während der zeitlichen Verschiebung durchläuft,
- den gemessenen Wert mit einem Referenzwert zu vergleichen, und
- hieraus zu schließen, ob mindestens eine der Leuchten funktionsunfähig ist und in diesem Fall den Fahrer entsprechend zu informieren.

2. Verfahren nach Anspruch 1, **dadurch gekennzeichnet, dass** die Verschiebung (d) des Endes der Einschaltung maximal 50 ms beträgt.

3. Verfahren nach Anspruch 2, **dadurch gekennzeichnet, dass** die Verschiebung (d) vorzugsweise in der Größenordnung von 15 ms liegt.

4. Verfahren nach einem der vorhergehenden Ansprüche, **dadurch gekennzeichnet, dass** es während der gesamten Dauer des Betriebs der Warnblinkleuchten kontinuierlich durchgeführt wird.

5. Verfahren nach einem der vorhergehenden Ansprüche, **dadurch gekennzeichnet, dass** es adaptiert wird, um die Fahrzeugseite zu bestimmen, welche eine funktionsunfähige Leuchte aufweist, und den Fahrer entsprechend zu informieren.

6. Verfahren nach einem der vorhergehenden Ansprüche, **dadurch gekennzeichnet, dass** die zwischen dem Ende der Einschaltung der rechten und linken Leuchten aufgebrachte zeitliche Verschiebung mit bloßem Auge nicht erkennbar ist.

7. Vorrichtung zum Durchführen des Verfahrens nach einem der vorhergehenden Ansprüche, welche Vorrichtung aufweist:
- ein Mittel zu zeitlichen und abwechselnden Verschieben des Endes der Einschaltung der rechten und linken Richtungsanzeigeleuchten des Fahrzeugs,
- ein Mittel zum Messen des Stroms (i), der eine Versorgungsschaltung der Warnblinkleuchten während der zeitlichen Verschiebung durchläuft,
- ein Mittel zum Vergleichen des gemessenen Stromwertes mit einem Referenzwert,
- ein Rechnermittel, das in der Lage ist, hieraus abzuleiten, ob mindestens eine Leuchte funktionsunfähig ist, und
- ein Mittel, das den Fahrer informiert, dass mindestens eine Warnblinkleuchte funktionsunfähig ist.
